# EUROPEAN PATENT APPLICATION

(11) **EP 3 096 462 A1**
(43) Date of publication of application: **23.11.2016**
(21) Application number: 14878428.3
(22) Date of filing: 17.12.2014
(51) Int. Cl.: H04B 1/38

(54) **MOBILE TERMINAL**

(30) Priority: 14.01.2014 KR 20140004758
(71) Applicant: LG Electronics Inc., Yeongdeungpo-gu Seoul 07336 (KR)
(72) Inventor: KIM, Myungsun, Seoul 06772 (KR); KIM, Taehyun, Seoul 06772 (KR); LEE, Byunghwa, Seoul 06772 (KR); SHIN, Choonghwan, Seoul 06772 (KR)
(74) Representative: Beyer, Andreas
(86) International application number: PCT/KR2014/012459
(87) International publication number: WO 2015/108287

(57) **Abstract**

A mobile terminal includes: a window having a first symbol on a surface of a first region and a second region, and the window having a second symbol on the surface of the first region and the second region, the second region being spaced from the first region; a first display unit disposed at the first region, and the first display unit configured to display the first symbol or the second symbol; and a second display unit disposed at the second region, and the second display unit configured to display the first symbol or the second symbol, wherein the first display unit to display the first symbol at the first region and the second display unit to simultaneously display the second symbol at the second region.

## Description

### BACKGROUND OF THE DISCLOSURE

### 1. Field of the Disclosure

This specification relates to a mobile terminal, and more particularly, to a mobile terminal capable of allowing a user to selectively switch positions of operational keys from each other.

### 2. Background of the Disclosure

In general, a terminal may be classified into a mobile (portable) terminal and a stationary terminal according to a moveable state. The mobile terminal may be also classified into a handheld terminal and a vehicle mount terminal according to a user's carriage method.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Various attempts have been made to implement complicated functions in such a multimedia device by means of hardware or software.

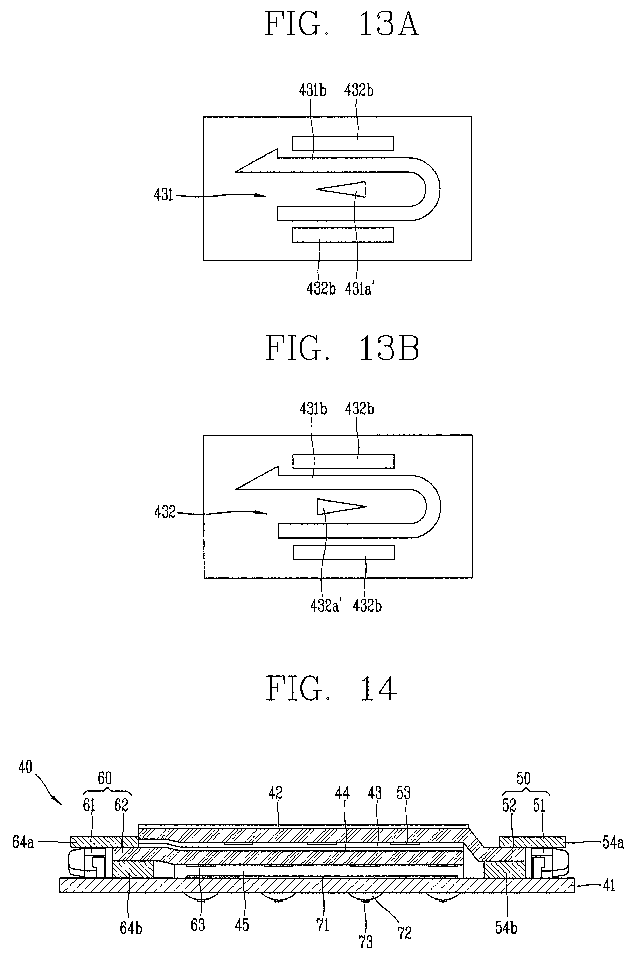

FIG. 14 is a sectional view of a keypad assembly in accordance with the conventional art.

Referring to FIG. 14, the conventional keypad assembly 40 may include a first key display unit 50, a second key display unit 60, a touch input unit 71 and a switch unit 72. The keypad assembly 40 is mounted on a printed circuit board (PCB) 41. The first key display unit 50 may display first key information, and may include a first light emitting device 51 and a first light guide film 52.

The first light emitting device 51 is mounted to one side of the PCB 41, and is configured to emit light toward one direction. First printed patterns 53 are provided on one surface of the first light guide film 52. The first light guide film 52 is configured to guide light emitted from the first light emitting device 51, to the first printed patterns 53. The first printed patterns 53 display first key information by light guided by the first light guide film 52. The key information may include a plurality of icons indicating selectable operation modes. For instance, the operation modes may include a call mode, a text message mode, a writing mode, a music or moving image play mode, a camera mode, etc.

The first printed patterns 53 are printed onto a rear surface of the first light guide film 52. A passivation layer 42, configured to protect the first light guide film 52 in a physical or chemical manner, is disposed on a front surface of the first light guide film 52. A diffusion layer 44, configured to diffuse light generated from second printed patterns 63, may be further provided on a rear surface of a deposition layer 43. The diffusion layer 44 is configured to concentrate light from the second printed patterns 63 to the first printed patterns 53.

The second key display unit 60 is disposed to overlap one surface of the first key display unit 50. The second key display unit 60 is configured to display second key information on a display region of first key information 81 when the first key display unit 50 is deactivated. Like the first key display unit 50, the second key display unit 60 includes a second light emitting device 61 and a second light guide film 62. The second light guide film 62 may be attached to a front surface of the PCB 41 by an adhesive 45.

The second light emitting device 61 is mounted to another side of the PCB 41, and is arranged to emit light toward a different direction from the first light emitting device 51. The second light emitting device 61 may be arranged to emit light toward an opposite direction to a light emitting direction of the first light emitting device 51.

Under such configuration, the same number of key information as light guide films may be displayed. However, as the first light guide film 52 and the second light guide film 62 are overlapped with each other, other symbol rather than a specific symbol may be faintly displayed in an overlapped manner with the specific symbol.

Unexplained reference numerals 54a, 54b, 64a and 64b indicate light shielding members.

### SUMMARY OF THE DISCLOSURE

Therefore, an aspect of the detailed description is to provide a mobile terminal capable of changing a position of a manipulation unit by a user's preference.

To achieve these and other advantages and in accordance with the purpose of this specification, as embodied and broadly described herein, there is provided a mobile terminal, including: a window having a first symbol on a surface of a first region and a second region, and the window having a second symbol on the surface of the first region and the second region, the second region being spaced from the first region; a first display unit disposed at the first region, and the first display unit configured to display the first symbol or the second symbol; and a second display unit disposed at the second region, and the second display unit configured to display the first symbol or the second symbol, wherein the first display unit to display the first symbol at the first region and the second display unit to simultaneously display the second symbol at the second region.

A portion of the second symbol at the first region may be overlapped with a portion of the first symbol at the first region, and a portion of the second symbol at the second region may be overlapped with a portion of the first symbol at the second region.

The mobile terminal may further comprise a shielding member at the first region, the shielding member may correspond to a shape of at least one of the first symbol and the second symbol.

The shielding member may separate the first symbol at the first region from the second symbol at the first region.

The first display unit further includes: a first member disposed at the first region, the first member being divided into parts corresponding to the first and second symbols, and the first member being configured to transmit light; a second member configured to divide the first member into a plurality of parts, by shielding light introduced into one part of the first member from being incident to another adjacent part; and a plurality of optical sources formed close to the divided parts to illuminate each of the divided parts.

The mobile terminal may further comprise a light shielding member to cover the plurality of optical sources.

The light shielding member may be integrally formed to cover all of the plurality of optical sources.

The optical sources may be formed close to the divided parts, and the optical sources may independently illuminate the divided parts.

A third symbol further may be at the surface of the first region, a fourth symbol may be at the surface of the second region, the first member at the first region may be divided into parts corresponding to the first to third symbols, and the mobile terminal may further comprise optical sources for illuminating the third symbol and the fourth symbol.

The first symbol may correspond to information on a menu, the second symbol may correspond to information on a back key, the third symbol may correspond to information on volume control, and the fourth symbol may correspond to information on order control.

When an operation mode of the mobile terminal is converted into a music or moving image play mode, the first and second symbols may be moved to a display unit, and the third and fourth symbols may be activated.

The first member and the second member may be formed by a double injection molding, and the first member may be formed of polycarbonate (PC), and the second member may be formed of thermoplastic poly urethane (TPU).

The mobile terminal may further comprise a light guide film (LGF) on the first member, the light guide film may have scratches.

The scratches may be formed at positions corresponding to the symbols.

The first and second symbols may be formed at positions corresponding to the divided parts.

The plurality of parts may be formed on a same plane.

A third region may be between the first region and the second region, and when the second region is touched after the first region has been touched for a predetermined time and then the third region is touched, display positions of first information and second information may be changed from each other.

Display positions of first information and second information may be changed from each other by simultaneously touching the first region and the second region for a predetermined time.

To achieve these and other advantages and in accordance with the purpose of this specification, there is provided a mobile terminal, comprising: a window having a first region that includes a first symbol and a second symbol at a surface, and the window having a second region that includes the first symbol and the second symbol at the surface, the second region being spaced from the first region; a first display unit at the first region to display the first symbol at the first region and to separately display the second symbol at the first region; and a second display unit at the second region to display the first symbol at the second region and to separately display the second symbol at the second region, wherein the first symbol is displayed at the first region by the first display unit simultaneously with the second symbol is displayed at the second region by the second display unit.

The second symbol may be displayed at the first region by the first display unit simultaneously with the first symbol being display at the second region by the second display unit.

The second symbol at the first region may be overlapped with the first symbol at the first region, and the second symbol at the second region may be overlapped with the first symbol at the second region.

The mobile terminal may further comprise a shielding member at the first region, the shielding member may separate the first symbol at the first region from the second symbol at the first region.

The shielding member may correspond to a shape of at least one of the first symbol and the second symbol.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1A is a block diagram for explaining a mobile terminal according to the present invention;
FIGS. 1B and 1C are conceptual views of a mobile terminal according to the present invention, which are viewed from different directions;
FIG. 2 is a planar view of a manipulation unit of a mobile terminal according to an embodiment of the present invention;
FIG. 3 is a sectional view of a display unit of a mobile terminal according to an embodiment of the present invention;
FIG. 4A is a planar view of a first display unit or a second display unit according to an embodiment of the present invention;
FIG. 4B is a planar view of the first display unit or the second display unit of FIG. 4A, each display unit having a light shielding member;
FIG. 5 is a sectional view of a display unit having a light guide film according to an embodiment of the present invention;
FIG. 6A is a planar view of a first display unit or a second display unit having undergone a laser etching process;
FIG. 6B is a sectional view of FIG. 6A;
FIGS. 7A to 8B are planar views of a mobile terminal for explaining that positions of symbols according to an embodiment of the present invention are switched from each other;
FIGS. 9A to 9C are views for explaining that some of symbols have been transferred to a display unit;
FIG. 10 is a view illustrating that a first member according to an embodiment of the present invention has been divided into a plurality of parts;
FIG. 11A is a view illustrating symbols of a first display unit according to an embodiment of the present invention;
FIG. 11B is a view illustrating symbols of a second display unit according to an embodiment of the present invention;
FIGS. 12A to 12C are views illustrating that a first part, a second part, a third part and a fourth part of a first member according to an embodiment of the present invention are illuminated by corresponding optical sources;
FIGS. 13A and 13B are views illustrating a third symbol and a fourth symbol according to an embodiment of the present invention; and
FIG. 14 is a sectional view of a keypad assembly in accordance with the conventional art.

### DETAILED DESCRIPTION OF THE DISCLOSURE

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC, an ultra book, a wearable device (e.g., smart watch), a glass-type terminal (e.g., smart glass), a head mounted display (HMD), etc.

However, it will be obvious to those skilled in the art that the present invention may be also applicable to a fixed terminal such as a digital TV, a desktop computer and a digital signage, except for specific configurations for mobility.

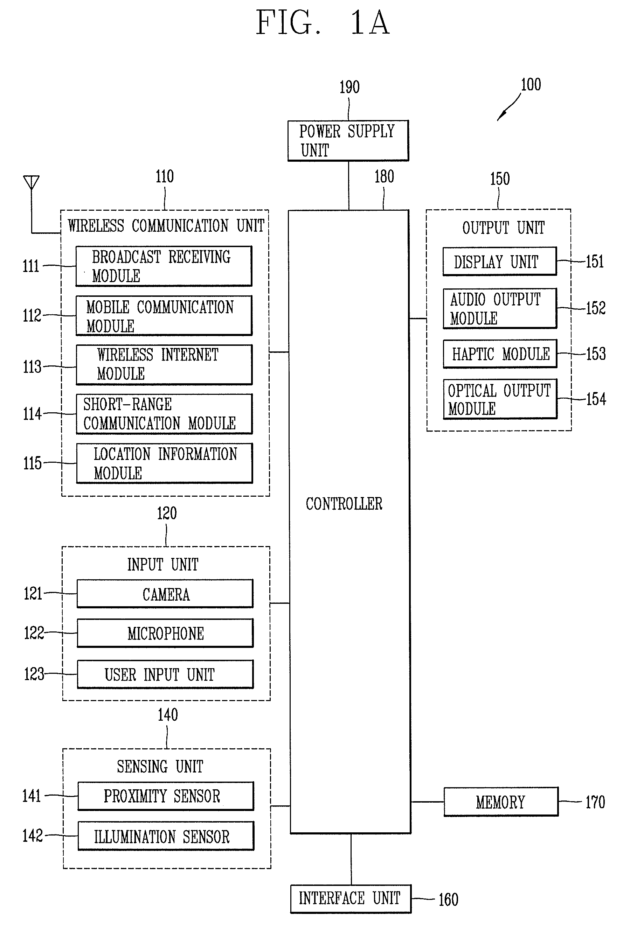

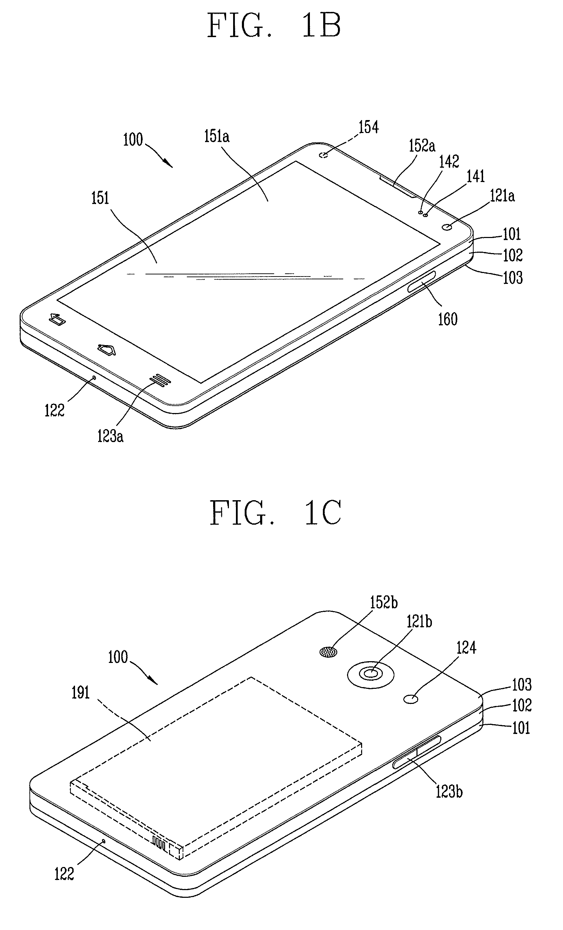

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components of FIG. 1A is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in FIG. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, GSM, CDMA, WCDMA, LTE and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the mobile terminal. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121 b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151 a and the front case 101, between the front case 101 and the rear case 102, or between the rear case 102 and the rear cover 103, to hermetically seal an inner space when those cases are coupled.

The display unit 151, the first audio output module 152a, the second audio output module 152b, the proximity sensor 141, the illumination sensor 142, the optical output module 154, a first camera 121 a, a second camera 121b, the first manipulation unit 123a, the second manipulation unit 123b, the microphone 122, the interface 160, etc. may be provided at the mobile terminal 100.

As shown in FIGS. 1B and 1C, the display unit 151, the first audio output module 152a, the proximity sensor 141, the illumination sensor 142, the optical output module 154, the first camera 121a and the first manipulation unit 123a are arranged on a front surface of the terminal body. The second manipulation unit 123b, the microphone 122 and the interface 160 are arranged on side surfaces of the terminal body. And the second audio output module 152b and the second camera 121b are arranged on a rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable mobile terminals. Examples of such suitable mobile terminals include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two mobile terminals, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151 a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a receiver, and the second audio output module 152b may be implemented in the form of a loud speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151 a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121 a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may be implemented in a user's non-tactile manner, e.g., by a proximity touch, a hovering touch, etc.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121 b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121 b is implemented as an array camera, images may be captured in various manners using the plurality of lenses and images with better qualities.

As shown in FIG. 1C, a flash 124 is shown adjacent to the second camera 121 b. When an image of a subject is captured with the camera 121 b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 (refer to FIG. 1A) may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Hereinafter, preferred embodiments of a control method by the mobile terminal will be explained in more detail with reference to the attached drawings.

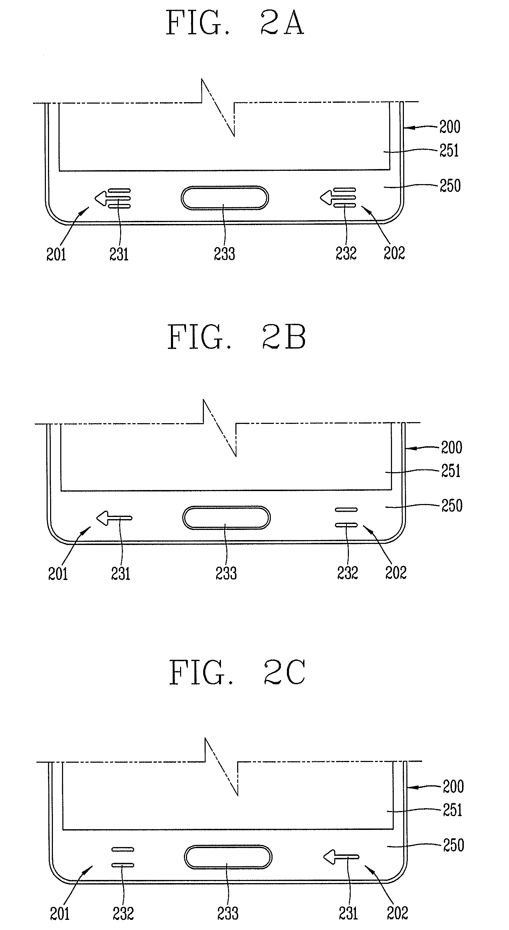

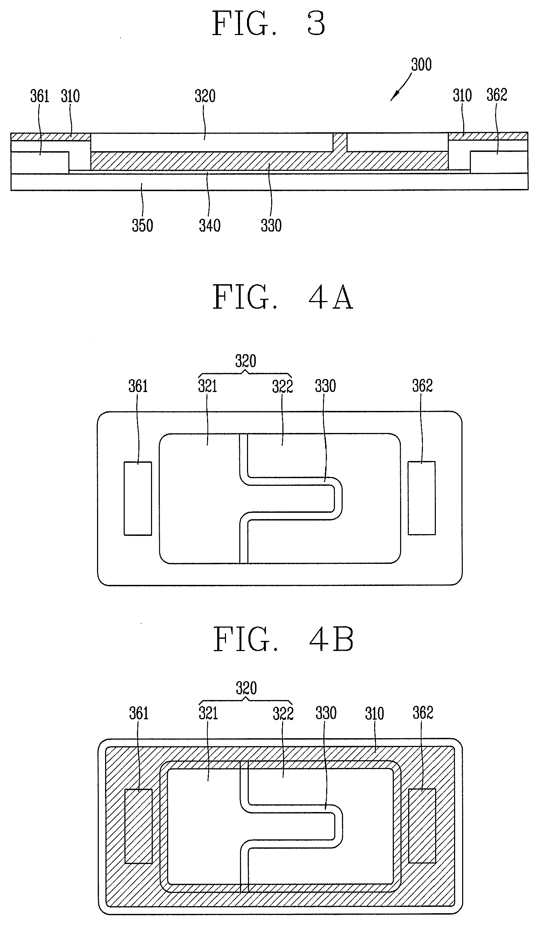

FIG. 2 is a planar view of a manipulation unit of a mobile terminal 200 according to an embodiment of the present invention, and FIG. 3 is a sectional view of a display unit 300 of a mobile terminal 200 according to an embodiment of the present invention. Referring to FIG. 2, a window 250 configured to display information on a menu key, a back key, etc. is disposed at a lower end of the mobile terminal 200. The window 250 includes a first region 201 and a second region 202. The first region 201 displays a first symbol 231 to outside, and the second region 202 is spaced from the first region 201 and displays a second symbol 232 to outside. The first symbol 231 is printed on a rear surface of the first region 201, and the second symbol 232 is printed on a rear surface of the second region 202. Hereinafter, a first display unit and a second display unit will be provided with the same reference numeral, since the first display unit and the second display unit are almost the same except for symbols.

The first display unit 300, configured to display the first symbol 231 or the second symbol 232, is disposed below the first region 201. The second display unit 300, configured to display the first symbol 231 or the second symbol 232, is disposed below the second region 202. The first display unit 300 and the second display unit 300 are configured to display the first symbol 231 and the second symbol 232 in an exclusive manner.

More specifically, the first symbol 231 and the second symbol 232 indicate different information. If the first display unit 300 displays the first symbol 231, the second display unit 300 displays the second symbol 232. On the contrary, if the first display unit 300 displays the second symbol 232, the second display unit 300 displays the first symbol 231.

FIG. 3 is a sectional view of the first display unit 300 or the second display unit 300 of the mobile terminal according to an embodiment of the present invention. As shown in FIG. 3, the first display unit 300 or the second display unit 300 includes a first member 320 configured to transmit light, a second member 330 configured to divide the first member 320 into a plurality of parts, and optical sources 361 and 362 formed close to the divided parts so that each of the divided parts can be illuminated. The first member 320 of the first display unit 300 is disposed below the first region 201, and is divided into parts corresponding to the first symbol 231 and the second symbol 232, respectively. The first member 320 of the second display unit 300 is disposed below the second region 202, and is divided into parts corresponding to the first symbol 231 and the second symbol 232, respectively.

The first member 320 is divided into a plurality of parts 321 and 322, as light introduced into one part of the first member 320 is shielded from being incident onto another adjacent part. The plurality of parts 321 and 322 are formed on the same plane.

In an embodiment of the present invention, a light shielding member 310 is formed above the optical sources 361 and 362, so as to cover the optical sources 361 and 362. The light shielding member 310 is integrally formed so as to cover all of the optical sources 361 and 362.

FIG. 4A is a planar view of the first display unit 300 or the second display unit 300 according to an embodiment of the present invention, and FIG. 4B is a planar view illustrating that the first display unit 300 or the second display unit 300 of FIG. 4A is provided with a light shielding member 310. As shown in FIG. 4B, the light shielding member 310 is disposed to cover all of optical sources, but not to cover the first member 320. The reason is in order to transmit light to outside through the first member 320. That is, the first member 320 may be a light guide plate.

The optical sources 361 and 362 are formed close to the divided parts 321 and 322, and are configured to illuminate the divided parts 321 and 322, independently. The same number of optical sources as the divided parts 321 and 322 are required. The reason is in order to individually control the plurality of symbols 231 and 232 corresponding to the divided parts 321 and 322.

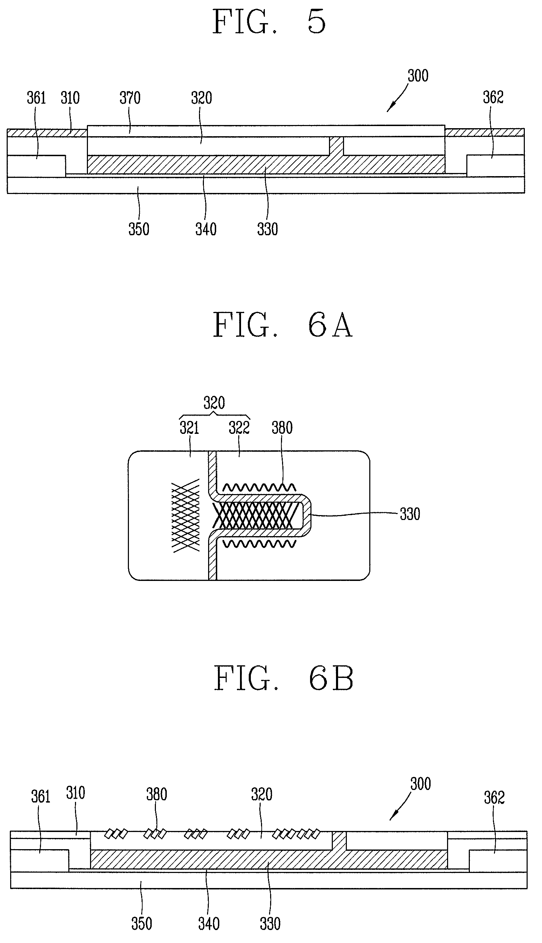

That is, as shown in FIGS. 4A and 4B, the first part 321 is illuminated by light emitted from the first optical source 361 adjacent to the first part 321, whereas the second part 322 is illuminated by light emitted from the second optical source 362. As shown in FIG. 5, the optical sources 361 and 362 are disposed on a printed circuit board 350, and the second member 330 is attached to the printed circuit board 350 by an adhesive member 340.

In an embodiment of the present invention, the first member 320 and the second member 330 are formed by a double injection molding. The first member 320 may be formed of polycarbonate (PC), and the second member 330 may be formed of thermoplastic poly urethane (TPU).

In an embodiment of the present invention, symbols should be formed within corresponding parts. If symbols are formed out of corresponding parts, it is difficult to distinguish the symbols from each other. This may cause a difficulty in determining a symbol to be displayed. For instance, the first symbol 231 should be formed within the first part 321, and the second symbol 232 should be formed within the second part 322.

In an embodiment of the present invention, as shown in FIG. 5, a light guide film (LGF) 370 having scratches 380 thereon such as blade scars may be disposed on the first member 320.

A front surface of the first member 320 may undergo a laser etching process. The first member 320 may be illuminated in a more uniform and light manner, by having the scratches 380 or through such laser etching process. FIG. 6A is a planar view of the first display unit 300 or the second display unit 300 having undergone a laser etching process, and FIG. 6B is a sectional view of FIG. 6A. The scratches 380 are formed at positions corresponding to the symbols 231 and 232. Alternatively, a laser etching process may be performed at positions corresponding to the symbols 231 and 232.

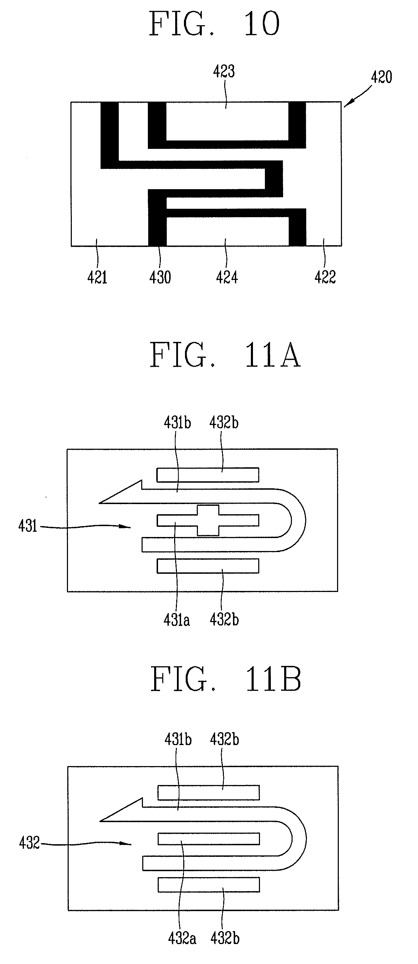

FIGS. 4A and 4B are views for explaining a case where two symbols are displayed on the first display unit 300 or the second display unit 300. In another embodiment of the present invention, three symbols may be displayed on the first display unit 300 or the second display unit 300. FIG. 10 is a view illustrating that the first member 420 according to an embodiment of the present invention has been divided into a plurality of parts 421,422,423 and 424. FIG. 11A is a view illustrating symbols of the first display unit 300 according to an embodiment of the present invention, and FIG. 11B is a view illustrating symbols of the second display unit 300 according to an embodiment of the present invention.

Referring to FIG. 10, the first member 320 is divided into four parts 421, 422, 423 and 424. The third part 423 and the fourth part 424 are configured to display the same symbols 431b. That is, since the second symbols 432b shown in FIGS. 11A and 11B are separated from each other, the first member 420 is also divided in correspondence to the divided symbols. Optical sources 463 and 464 for illuminating the third part 423 and the fourth part 424 should simultaneously flicker on and off, because the third part 423 and the fourth part 424 should be displayed simultaneously.

In an embodiment of the present invention, a third symbol 431a is further formed on a rear surface of the first region 201, and a fourth symbol 432a is further formed on a rear surface of the second region 202. The first member 420 disposed below the first region 201 is divided into parts corresponding to the first to third symbols 431 b, 432b and 431a. The first member 420 disposed below the second region 202 is divided into parts corresponding to the first, second and fourth symbols 431 b, 432b and 432a. The mobile terminal further includes an optical source 461 for illuminating the third symbol 431 a or the fourth symbol 432a. The symbol 431 displayed by the first display unit (refer to FIG. 11A) is the same as the symbol 432 displayed by the second display unit (refer to FIG. 11 B), except for the third symbol 431 a and the fourth symbol 432a.

More specifically, as shown in FIG. 11A, the first part 421 of the first display unit 300 corresponds to the symbol 431 a, the second part 422 corresponds to the symbol 431 b, and the third part 423 and the fourth part 424 correspond to the symbols 432b. Likewise, as shown in FIG. 11B, the symbol 432a corresponds to the first part 421 of the second display unit 300, the symbol 431 b corresponds to the second part 422 of the second display unit 300, and the symbols 432b correspond to the third part 423 and the fourth part 424 of the second display unit 300. Optical sources 461, 462, 463 and 464 for illuminating the first to fourth parts, independently are disposed close to the first to fourth parts.

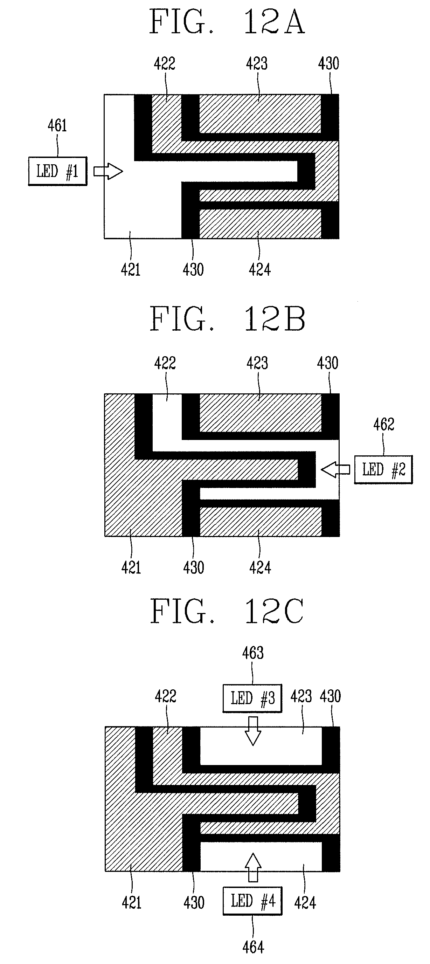

FIGS. 12A to 12C are views illustrating that the first to fourth parts 421 to424 of the first member 420 according to one embodiment of the present invention are illuminated by the corresponding optical sources 461 to 464. More specifically, the first part 421 is illuminated by the first optical source 461, the second part 422 is illuminated by the second optical source 462, the third part 423 is illuminated by the third optical source 463, the fourth part 424 is illuminated by the fourth optical source 464.

The first symbol 431 b indicates information on a back key, and the second symbol 432b indicates information on a menu. The third symbol indicates information on volume control, and the fourth symbol indicates information on order control. FIGS. 11A and 11B illustrate a third symbol 431a and a fourth symbol 432a indicating information on volume control, as well as a menu-related symbol and a back key-related symbol. The third symbol 431a is configured to increase a volume, whereas the fourth symbol 432a is configured to decrease a volume. FIGS. 13A and 13B are views illustrating a third symbol 431 a' and a fourth symbol 432a' according to an embodiment of the present invention indicate information on order control.

FIGS. 13A and 13B illustrate the third symbol 431a' and the fourth symbol 432a' indicating a previous state or a next state, as well as a menu-related symbol and a back key-related symbol.

In the above configuration, the third symbols 431a and 432a (refer to FIGS. 11A and 11B) are formed as one pair, and the fourth symbols 431 a' and 432a' (refer to FIGS. 13A and 13B) are formed as one pair. However, the present invention is not limited to this. For instance, symbols for performing individual functions may be displayed at the first display unit 300 and the second display unit 300.

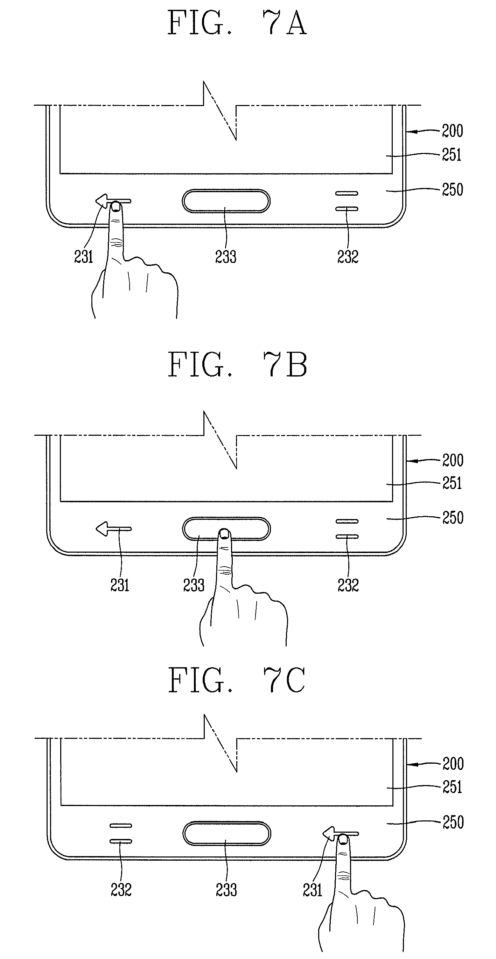

In an embodiment of the present invention, a position of the first symbol 231 for indicating first information displayed by the first display unit 300 may be switched from a position of the second symbol 232 for indicating second information displayed by the second display unit 300. Hereinafter, a method of switching a position of the first symbol 231 from a position of the second symbol 232 will be explained in more detail with reference to FIG. 7.

In an embodiment of the present invention, a third region 233 is formed between the first region 201 and the second region 202, on a front surface of the mobile terminal 200. If the second region 202 is touched after the first region 201 has been touched for a predetermined time and then the third region 233 has been touched, display positions of first information and second information may be switched from each other.

For instance, as shown in FIGS. 7A to 7C, if the first region 201 is touched for a second, the third region 233 is touched in a drag manner, and then the second region 202 is touched, positions of the first symbol 231 and the second symbol 232 may be switched from each other.

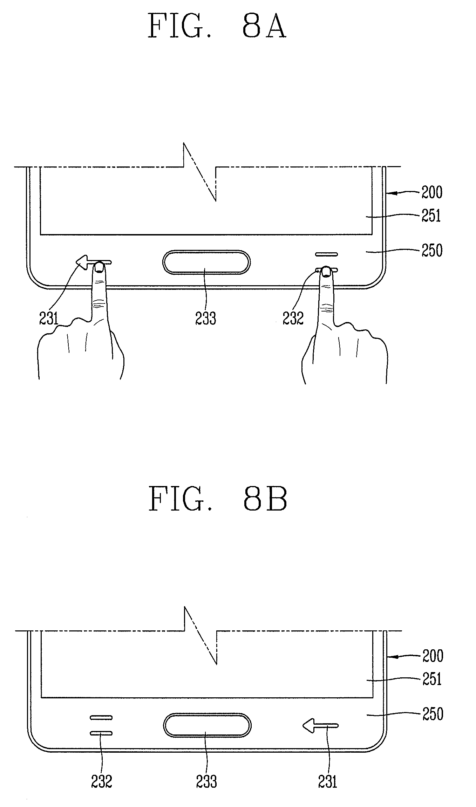

As shown in FIGS. 8A and 8B, display positions of the first information and the second information may be switched from each other by simultaneously touching the first region 201 and the second region 202 for a predetermined time. For instance, if the first region 201 and the second region 202 are simultaneously touched for 3 seconds, positions of the first symbol 231 and the second symbol 232 may be switched from each other.

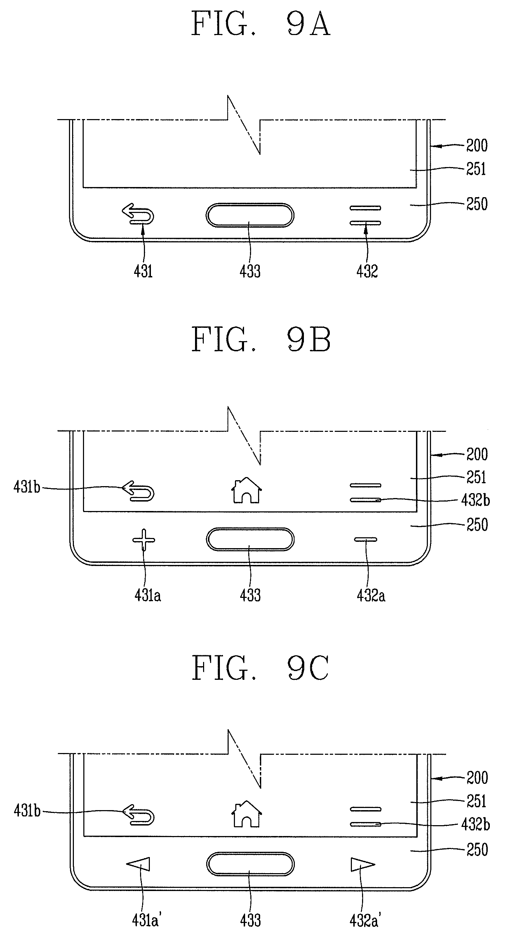

In an embodiment of the present invention, once an operation mode of the mobile terminal 200 is converted into a music or moving image play mode, the first and second symbols 431 a and 431 b are moved to the display unit 251, and the third and fourth symbols 431a and 432a are activated. Referring to FIG. 9, in a general operation mode, a symbol 431 and a symbol 432 are displayed. If the operation mode is converted into a music play mode, the symbol 431 and the symbol 432 are moved to the display unit 251 as shown in FIG. 9B (refer to 431b and 432b). In this case, volume control may be performed by the third symbol 431a and the fourth symbol 432a. In another embodiment, as shown in FIG. 9C, order control may be performed by a third symbol 431 a' and a fourth symbol 432a'.

The mobile terminal according to the present invention may have the following advantages.

The first member serving as a light guide film is divided into a plurality of parts, and optical sources are arranged to correspond to the divided parts, respectively. This can solve the conventional problem that symbols are displayed in an overlapped manner.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a window having a first symbol printed onto a rear surface of a first region, and having a second symbol printed onto a rear surface of a second region spaced from the first region;
a first display unit disposed below the first region, and configured to display the first symbol or the second symbol; and
a second display unit disposed below the second region, and configured to display the first symbol or the second symbol,
wherein the first display unit and the second display unit are configured to display the first symbol and the second symbol in an exclusive manner.

2. The mobile terminal of claim 1, wherein each of the first display unit and the second display unit includes:
a first member disposed below the first or second region, divided into parts corresponding to the first and second symbols, and configured to transmit light;
a second member configured to divide the first member into a plurality of parts, by shielding light introduced into one part of the first member from being incident onto another adjacent part; and
optical sources formed close to the divided parts such that each of the divided parts is illuminated.

3. The mobile terminal of claim 2, wherein a light shielding member is formed above the optical sources, so as to cover the optical sources.

4. The mobile terminal of claim 3, wherein the light shielding member is integrally formed so as to cover all of the optical sources.

5. The mobile terminal of claim 2, wherein the optical sources are formed close to the divided parts, and illuminate the divided parts independently.

6. The mobile terminal of claim 2, wherein a third symbol is further formed on a rear surface of the first region,
wherein a fourth symbol is further formed on a rear surface of the second region,
wherein the first member disposed below the first region is divided into parts corresponding to the first to third symbols,
wherein the first member disposed below the second region is divided into parts corresponding to the first, second and fourth symbols, and
wherein the mobile terminal further comprises optical sources for illuminating the third symbol and the fourth symbol.

7. The mobile terminal of claim 2, wherein the first member and the second member are formed by a double injection molding, and
wherein the first member is formed of polycarbonate (PC), and the second member is formed of thermoplastic poly urethane (TPU).

8. The mobile terminal of claim 2, wherein a light guide film (LGF) having scratches thereon is disposed on the first member.

9. The mobile terminal of claim 2, wherein a front surface of the first member undergoes a laser etching process.

10. The mobile terminal of claim 2, wherein the symbols are formed at positions corresponding to the divided parts.

11. The mobile terminal of claim 6, wherein the first symbol indicates information on a menu,
wherein the second symbol indicates information on a back key,
wherein the third symbol indicates information on volume control, and
wherein the fourth symbol indicates information on order control.

12. The mobile terminal of claim 2, wherein the plurality of parts are formed on the same plane.

13. The mobile terminal of claim 1, wherein a third region is formed between the first region and the second region, and
wherein when the second region is touched after the first region has been touched for a predetermined time and then the third region has been touched, display positions of first information and second information are switched from each other.

14. The mobile terminal of claim 1, wherein the display positions of the first information and the second information are switched from each other by simultaneously touching the first region and the second region for a predetermined time.

15. The mobile terminal of claim 11, wherein when an operation mode of the mobile terminal is converted into a music or moving image play mode, the first and second symbols are moved to a display unit, and the third and fourth symbols are activated.

16. The mobile terminal of 15, wherein volume control and order control are performed by the third symbol and the fourth symbol.

17. The mobile terminal of claim 2, wherein the optical sources are attached to a printed circuit board.

18. The mobile terminal of claim 17, wherein the second member is attached to the printed circuit board by an adhesive member.

19. The mobile terminal of claim 2, wherein the first member is a light guide plate (LGP).

20. The mobile terminal of claim 8, wherein the scratches are formed at positions corresponding to the symbols.
